(19) Europäisches Patentamt
European Patent Office
Office européen des brevets

(11) EP 2 361 951 A1

(12) EUROPEAN PATENT APPLICATION

(43) Date of publication:
31.08.2011 Bulletin 2011/35

(21) Application number: 10001679.9

(22) Date of filing: 18.02.2010

(51) Int Cl.:
*C08L 23/12* (2006.01) *C08L 23/10* (2006.01)
*C08K 5/00* (2006.01) *C08K 5/3437* (2006.01)
*C08K 5/098* (2006.01) *C08K 3/22* (2006.01)
*C08K 3/26* (2006.01) *C08K 3/30* (2006.01)
*C08K 3/00* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Borealis AG**
**1220 Vienna (AT)**

(72) Inventor: **Ruemer, Franz**
**4222 St. Georgen/Gusen (AT)**

(74) Representative: **Kador & Partner**
**Corneliusstrasse 15**
**80469 München (DE)**

(54) **Stabilized polypropylene composition with improved lifetime and ageing properties**

(57) Polypropylene composition comprising a base resin consisting of at least one propylene homo- or copolymer, an acid scavenger and a pigment.

EP 2 361 951 A1

Printed by Jouve, 75001 PARIS (FR)

## Description

The present invention relates to stabilized polypropylene compositions and to a process for producing such polypropylene compositions, an article made of a stabilized polypropylene composition, and a stabilization mixture for producing these compositions.

Polyolefin compositions are prone to degradation during processing and end use. Especially degradation occurs, when the material is exposed to certain environmental conditions such as high energy radiation (e.g. UV exposure), mechanical shear and high temperatures. Furthermore, chlorine containing water also has negative effects on the polymer when being transported in polypropylene pipes. For these reasons, the polymers have reduced lifetimes and ageing properties.

Degradation proceeds in radical mechanism, and will finally destroy the polymer properties. The polyolefins are going through an ageing process. Usually the initializing step of the degradation process is the loss of a hydrogen atom from the polymer chain. This polymer free radical (R*) can react with an oxygen ($O_2$) molecule to form a peroxy radical (ROO*) which will in turn abstract another hydrogen atom from another polymer chain to form a hydroperoxide (ROOH). The hydroperoxide can split into two new free radicals (RO*) and (*OH), which continue to propagate the reaction to other polyolefin molecules.

In polyolefins the attack from free radicals can result in chain scission. One way to interrupt this process is to add an antioxidant into the composition.

The published Japanese patent application JP 05-170932 discloses polypropylene pipes for water supply purposes. It is disclosed that by adding certain antioxidants to different kinds of polypropylene, the endurance time of these pipes can be increased.

WO 03/064511 discloses different types of antioxidants for increasing the lifetime of a polyolefin pipe which is in permanent contact with chlorinated water, namely an epoxidized fatty acid or ester thereof and/or an organotin compound.

However, there is still a need for polypropylene compositions which impart a prolonged lifetime and improved ageing properties and for articles made thereof.

Thus, it is the object of the present invention to provide a polyolefin having minimized degradation during processing and also during final use resulting in improved lifetime and ageing properties.

The present invention is based on the inventive finding that a polyolefin can be stabilized if the polyolefin composition comprises a pigment and an acid scavenger.

Therefore, the present invention provides a polypropylene composition comprising a base resin, consisting of at least one propylene homo- or copolymer, an acid scavenger and a pigment.

It has surprisingly been found that the stabilization by the combination of an acid scavenger and a pigment results in prolonged lifetime and improved ageing properties. Particularly, it has surprisingly been found that the combination of the pigment and the acid scavenger shows a synergistic stabilization effect on propylene homo or copolymers, particularly on propylene homo- or copolymers having a considerable amount of beta-crystallinity.

Usually pigments are avoided for all applications requiring oxidation stability as the resulting compositions which contain pigments are sometimes even more susceptible to photodegradation and are more difficult to stabilize against such photodegradation than the unpigmented polymers.

The polypropylene composition also has processability and mechanical properties necessary to fulfill the requirements for polymer pipes for fluid transport such as high pressure resistance in combination with good long term properties.

The combined stabilization by pigments and acid scavenger is particularly effective when the base resin has beta-crystallinity. Beta-nucleated propylene polymers are isotactic propylene polymers composed of chains in a $3_1$ helical conformation having an internal microstructure of beta-form spherulites being composed of radial array of parallel stacked lamellae. The presence of the beta-form can be detected through the use of Differential Scanning Calorimetry or Wide Angle X-Ray Scattering.

The base resin of the polypropylene composition according to the invention preferably has an amount of beta-crystallinity determined by Differential Scanning Calorimetry of at least 60 %. More preferably the composition has an amount of beta-crystallinity of at least 70 %, still more preferably at least 75 %, still more preferably at least 80 %, still more preferably at least 85 %, still more preferably at least 90 %, most preferably at least 95 %.

Beta-polypropylene can be formed by the addition of beta-nucleating agents to the propylene melt and subsequent crystallization. The beta-crystallinity is preferably induced by a beta-nucleating agent according to either at least one quinacridone compound of formulas I to III

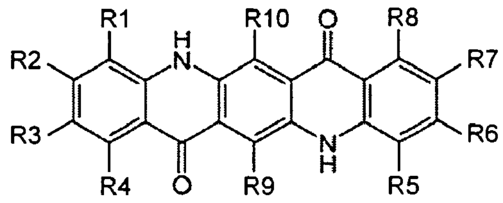

I

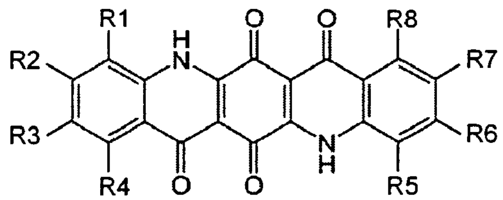

II

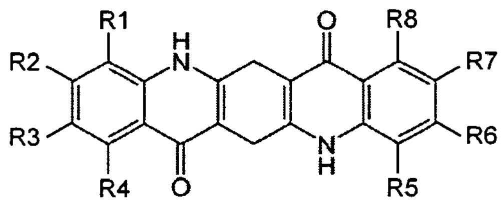

III

wherein R1, R2, R3, R4, R5, R6, R7, R8, R9 and R10 independently are H, alky, halogen, alkoxy or aryl; or at least one dicarboxylic acid salt of at least one earth alkali metal or a mixture thereof.

Preferably R1, R2, R3, R4, R5, R6, R7, R8, R9 and R10 independently are H, $CH_3$, Cl, methoxy or phenyl.

The more preferred quinacridone compounds of formula I are quinacridone, dimethylquinacridone and dimethoxyquinacridone. The more preferred quinacridone compounds of formula II are quinacridonequinone, a mixed crystal of 5,12-dihydro-quino(2,3b)acridine-7,14-dione with quino(2,3b)acridine-6,7,13,14-(5H, 12H)-tetrone as disclosed in EP-B0177961 and dimethoxyquinacridonequinone. The more preferred quinacridone compounds of formula III are dihydroquinacridone, dimethoxydihydroquinacridone and dibenzodihydroquinacridone.

The dicarboxylic acid salts of earth alkali metals more preferably are pimelic acid calcium salt and suberic acid calcium salt and mixtures thereof.

Mixtures of such nucleating agents may also be employed.

Most preferably, the beta-nucleating agent for inducing beta-crystallinity is cinquasia gold or pimelic acid calcium salt, usually cinquasia gold.

Further suitable types of beta-nucleating agents are:

dicarboxylic acid derivate type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids,

diamine derivate type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines,

amino acid derivate type diamide compounds from amidation reaction of $C_5$-$C_8$-alkyl-, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic mono-amines,

salts of earth alkali metals and imido acids of the formula IV

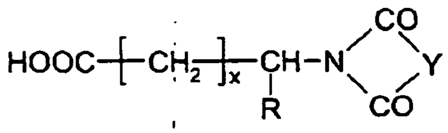

wherein x = 1 to 4; R = H, -COOH, $C_1$-$C_{12}$-alkyl, $C_5$-$C_8$-cycloalkyl or $C_6$-$C_{12}$-aryl, and Y = $C_1$-$C_{12}$-alkyl, $C_5$-$C_8$-cycloalkyl or $C_6$-$C_{12}$-aryl - substituted bivalent $C_6$-$C_{12}$-aromatic residues, preferably calcium salts of phthaloylglycine, hexahydrophthaloylglycine, N- phthaloylalanine and/or N-4-methylphthaloylglycine.

Beta-nucleated polypropylene with an amount of beta-crystallinity of at least 60 % can be obtained for example by using a beta-nucleating agent of molecular weight between 160 g/mol to 500 g/mol in an amount of 0.5 to 100 ppm with respect to the polypropylene composition. More preferably, the beta-nucleating agent is used in an amount of 1 to 80 ppm, more preferably of 10 to 70 ppm, most preferably of 30 to 50 ppm,

The beta-nucleating agent can be provided in a master batch. The master batch preferably consists of the beta-nucleating agent, a polypropylene resin and a polyolefin wax.

An acid scavenger is a compound being capable of reacting with acid residues of Brønsted acids occurring under polymer formation.

The acid scavenger preferably is a metal oxide or a metal hydroxy carbonate or mixtures thereof.

Preferably, the acid scavenger is selected from the group of earth alkali and/or transition metal oxide, or earth alkali and/or boron group metal hydroxy carbonate or mixtures thereof. More preferably, the acid scavenger is an earth alkali metal oxide or magnesium-aluminum hydroxy. carbonate or mixtures thereof. Still more preferably, the acid scavenger is magnesium oxide or hydrotalcite or mixtures thereof. Most preferably, the acid scavenger is magnesium oxide or synthetic hydrotalcite or mixtures thereof.

The acid scavenger is preferably present in an amount of 0.01 to 1 wt% with respect to the propylene composition. More preferably, the acid scavenger is present in an amount of 0.05 to 0.5 wt%, most preferably 0.05 to 0.2 wt%

It is to be understood that the amount of acid scavenger refers to the total amount of the respective compound irrespective of the capability of reacting with acid residues of Bronsted acids. For example when magnesium oxide is used as the acid scavenger the amount in the composition refers to the total of magnesium atoms irrespective of the capability of reacting with further acids.

The pigment preferably is a white pigment. A white pigment is a pigment having a refractive index of at least 1.8 when measured according to ASTM D542 using an Abbé refractometer.

Still more preferably the pigment is titanium dioxide (CAS No. 13463-67-7) in its natural form rutile (refracticve index 2.70), anatase (refractive index 2.44) or brookite, or a synthetic form such as monoclinic, tetragonal or orthorhombic, or a high pressure form such as the monoclinic baddeleyite-like form or an orthorhombic alpha-$PbO_2$-like form, or zinc sulfide or mixtures thereof. Most preferably, the pigment is titanium dioxide rutile form or zinc sulfide in its alpha-form (CAS No. 1314-98-3, refractive index 2.57).

The pigment is usually present in an amount of 0.1 to 3 wt% with respect to the propylene composition. More preferably the pigment is present in an amount of 0.2 to 1.5 wt%, still more preferably 0.3- 1 wt%, most preferably 0.4 to 0.7 wt%.

The white pigment can be provided in a master batch. The master batch preferably consists of the white pigment and polyethylene or white pigment and polypropylene.

The polypropylene composition of the present invention preferably has an MFR of 0.05 to 40 g/10min at 230°C/2.16 kg, more preferably of 0.05 to 15 g/10min at 230°C/2.16 kg, more preferably 0.1 to 8 g/10min at 230°C/2.16 kg, most preferably 0.2 to 5 g/10min at 230°C/2.16 kg.

Furthermore, the polypropylene composition of this invention preferably has a density of between 900 to 940 $kg/m^3$.

The base resin preferably is a propylene copolymer being a copolymer formed from propylene and at least one comonomer selected from ethene and/or alpha-olefins.

Preferably, the base resin is a propylene copolymer, whereby the comonomer of the propylene copolymer forming the base resin is at least one alpha-olefin selected from $C_2$, $C_4$-$C_{18}$ alpha-olefins. Preferably, the base resin comprises 0.1 to 10 wt% of comonomer.

It is to be understood that the amount of comonomer refers to the total amount of comonomer in the base resin irrespective of the number of different comonomers that are used.

The propylene copolymer forming the base resin can be a propylene random copolymer or a propylene block

copolymer, preferably a propylene random copolymer.

In the first embodiment, when the base resin is a propylene block polymer forming the base resin, the propylene block polymer preferably comprises 0.1 to 10 wt% of comonomer. The propylene block copolymer more preferably comprises 3 to 9 wt%, most preferably 7 to 9 wt% of comonomer. The comonomer of the propylene block copolymer is preferably at least one $C_2$, $C_4$-$C_8$ alpha-olefin. More preferably the comonomer is selected from ethene, 1-butene, 1-pentene, 1-hexene, 4-methyl-1-pentene and 1-octene. Particularly preferred is ethene.

In the second and preferred embodiment, the base resin is a propylene random copolymer. In this embodiment, the propylene random copolymer comprises 1 to 7 wt% of comonomer, more preferably comprises 2 to 6 wt%, most preferably comprises 3 to 5 wt% of comonomer.

The comonomer of the propylene random copolymer is preferably at least one $C_2$, $C_4$-$C_8$ alpha-olefin, more preferably the comonomer is selected from ethene, 1-butene, 1-pentene, 1-hexene, 4-methyl-1-pentene and 1-octene. Particularly preferred is ethene. The comonomer content is preferably form about 2 wt% to 10 wt%, more preferably from about 3 wt% to 7 wt%, and most preferably from about 3.5 wt% to 4 wt%.

The propylene homo- or copolymer used in this invention may be produced by single- or multistage process polymerization of propylene or propylene and alpha-olefins and/or ethene such as bulk polymerization, gas phase polymerization, slurry polymerization, solution polymerization or combinations thereof using conventional catalysts. A homo- or copolymer can be made either in loop reactors or in a combination of loop and gas phase reactors. Those processes are well known to one skilled in the art.

A suitable catalyst for the polymerization of the propylene polymer is any stereospecific catalyst for propylene polymerization which is capable of polymerizing and copolymerizing propylene and comonomers at a temperature of 40 to 110 °C and at a pressure from 10 to 100 bar. Ziegler Natta catalysts as well as metallocene catalysts are suitable catalysts.

The polypropylene compositions of the present invention may additionally also contain additives in up to 20 wt% with respect to the total composition.

In this case, the polypropylene composition of the present invention consists of

i. a base resin, consisting of at least one propylene homo- or copolymer;
ii. an acid scavenger;
iii. a pigment; and
iv. additives in an amount of up to 20 wt% with respect to the total composition.

An additive within this invention shall denote any compound selected from the group of further polymeric compounds, further pigments with refractive indices below 1.8, when measured according to ASTM D542 using an Abbé refractometer (i.e. non-white pigments), such as phthalocyanin, stabilizers such as antioxidants, metal deactivators and UV stabilizers, fillers such as clay, talc, mica, calcium carbonate, glass spheres, wollastonite, wood flour and barium sulfide, processing aids, antistatic agents and metal salts of organic acids.

Preferably, the amount of additives is up to 10 wt% with respect to the total composition.

Furthermore, it is preferred that the amount of further pigments with refractive indices below 1.8 when measured according to ASTM D542 using an Abbé refractometer (i.e. non-white pigments) is up to 2 wt%, more preferably up to 1 wt%, most preferably 0.4 wt% with respect to the total composition.

Typically, the composition contains for instance 0.01 to 2.5 wt% stabilizers and/or 0.01 to 1 wt% metal salts of organic acids as component (iv) with respect to the total composition.

Typical stabilizers are antioxidants, metal deactivators and UV-stabilizers. Typical UV-stabilizers are UV absorbers and hindered amine light stabilizers.

Preferably, the additive component (iv) includes at least one antioxidant. Preferred antioxidants are sterically hindered phenols or phosphorus-based antioxidants or mixtures thereof. Most preferred sterically hindered phenols are Pentaerythrityl-tetrakis(3-(3,5'-di-tert. butyl-4-hydroxyphenyl)-propionate (Irganox 1010) [CAS-No. 6683-19-8] and 1,3,5-Trimethyl-2,4,6-tris-(3,5-di-tert. butyl-4-hydroxy-phenyl) benzene (Irganox 1330) [CAS-No. 1709-70-2]. Most preferred phosphorus-based antioxidant is Tris(2,4-di-t-butylphenyl)phosphite (Irgafos 168) [CAS-no. 31570-04-4]

The antioxidant is preferably present in an amount of 0.05 to 1.5 wt% with respect to the propylene composition.

Preferably, the additive component (iv) includes at least one metal salt of an organic acid. Preferably, the metal salt of an organic acid is selected from the group of alkali and/or earth alkali and/or transition metal salts of an organic acid. More preferably, the metal salt of an organic acid is selected from the group of alkali and/or earth alkali and/or transition metal stearate, or lactate. More preferably, the metal salt of an organic acid is selected from the group of calcium stearate, sodium stearate, zinc stearate or calcium dilactate. Most preferred is calcium stearate.

The metal salt of an organic acid is preferably present in an amount of 0.01 to 0.1 wt% with respect to the polymer composition.

The lifetime of the stabilized polypropylene compositions according to the present invention is measured by

ageing tests, namely oven ageing and oxidation induction time (OIT) test, after storage in chlorinated water.

The oven ageing test and the OIT test are accelerated ageing tests that are used to predict the long term stability of polymers. Thus, the tests are a qualitative assessment of the level or degree of stabilization of the material tested. The tests can be used as a sensitive control measure to monitor the stabilization level in formulated resins.

One of the most important environmental stresses seen by polymers is high temperature exposure in the presence of air, also known as thermal-oxidative degradation. For oven ageing, high temperatures are used so that failures occur in a reasonable length of time. The OIT test is designed to accelerate the thermal-oxidative degradation and therefore the test requires the presence of oxygen at elevated temperatures. The test method outlines a procedure for the determination of oxidation induction time (OIT) of polymeric materials by differential scanning calorimetry (DSC).

The polypropylene composition according to the invention preferably has an oxidation induction time (OIT), determined according to the international standard ISO 11357-6:2002(E)), at 210 °C of at least 5 minutes, after storage in chlorinated water with a chlorine content of 8 ppm, and a temperature of 90 °C for 5 weeks. More preferably, the OIT at 210 °C after storage in chlorinated water is 10 minutes, still more preferably 15 minutes and most preferably up to 30 minutes. In contrast, non stabilized polypropylene compositions have an OIT at 210 °C after storage in chlorinated water of most usually up to 3 minutes. Thus, the polypropylene compositions of the present invention have an increased OIT at 210 °C compared to non stabilized polypropylene compositions after storage in chlorinated water.

For determining the oxidation induction time according to the international standard ISO 11357-6:2002(E)), the temperature profile is as follows. The compression molded test specimen is pre-equilibrated with nitrogen and then heated up with 20 °C/min up to 212 °C keeping it at this temperature for 5 min (isothermal equilibration), thereafter switching from nitrogen to oxygen. The gas flow for nitrogen and oxygen is at 50ml/min, when the measurement is performed on a DSC TA 2920 apparatus from TA Instruments.

The compression molded test specimens are prepared as described in section 6 (c) of the international standard ISO 11357-6: 2002 (E), whereby the dimension is adjusted to 50 mm x 10 mm x 2 mm. The weight of the test samples typically is in the range of 13-16 mg.

Furthermore, the polypropylene composition according to the invention preferably has a time to failure, determined according to the ISO standard ISO 4577-1983:E-8-2, within an oven test at 130 °C of at least 1000 hours after storage in chlorinated water with a chlorine content of 8 ppm and a temperature of 90 °C for 5 weeks when being determined on compression molded test specimens having dimension 50 mm x 10 mm x 1 mm being prepared according to ISO1873/2. The time to failure is determined by visual inspection (Figures 1 and 2) of the deterioration of the test specimen surface (dimensions of test specimen 50 mm x 10 mm x 1 mm). More preferably, the time before failure within the oven test at 130 °C after storage in chlorinated water is 2000 hours, still more preferably 3000 hours and most preferably up to 5000 hours. In contrast, non stabilized polypropylene compositions have a time before failure in an oven test at 130 °C after storage in chlorinated water of usually up to 180 hours. Thus, the polypropylene compositions of the present invention have an increased time before failure within an oven test at 130 °C compared to non stabilized polypropylene compositions after storage in chlorinated water.

Furthermore, the present invention relates to a process for producing the polypropylene according to this invention. The propylene composition is preferably prepared by melt mixing (e.g. hot cylinder mixing, twin screw extrusion) the base resin with components comprising beta-nucleating agents, acid scavengers and pigments at temperatures from 175 to 250°C. The polypropylene composition is then extruded through one or more circular dies and either pelletized immediately by underwater pelletizing or solidified as one or more strands and pelletized.

Further, the present invention relates to an article made of the polypropylene composition according to the invention.

A preferred application for the inventive polypropylene composition is the manufacture of pipes with increased lifetime for the transportation of chlorine-containing water. Thus, preferably the article is a pipe. The composition of the present invention is also suitable for extrusion-, injection- or compression moulding.

The term "pipe" as used herein is meant to encompass pipes in a broader sense, including supplementary parts like fittings, valves and all parts which are commonly necessary for e.g. a water piping system. Pipes according to the invention also encompass single and multilayer pipes, where for example one or more of the layers is a metal layer and pipes, which may include an adhesive layer. Other constructions of pipes, e.g. corrugated pipes, double wall pipes with or without hollow sections, are possible as well.

Pipes are produced by first plasticizing the propylene polymer composition in an extruder at temperatures in the range of from 200 to 250°C and then extruding it through an annular die and cooling it. The extruders for producing the pipes can be single screw extruders with an L/D of 20 to 40 or twin screw extruders or extruder cascades of homogenizing extruders (single screw or twin screw). Optionally a melt pump and/or a static mixer can be used additionally between the extruder and the ring die head. Ring shaped dies with diameters ranging from approximately 16 to 2000 mm and even greater are possible. The melt arriving from the extruder is first distributed over an angular cross section via conically arranged holes and then fed to the core/die combination via a coil distributer or screen. If necessary, restrictor rings or other structural elements for ensuring uniform melt flow may additionally be installed before the die

outlet. After leaving the annular die, the pipe is taken of over a calibrating mandrel, usually accompanied by cooling of the pipe by air cooling and/or water cooling, optionally also with inner water cooling. Preferred ways of producing pipes from β-nucleated polypropylene are disclosed in EP-A-1 887 934.

Fittings and valves are produced by injection molding. Injection molding machines with injection zones are used which have three-zone screws with a screw length of 18 to 24 D. Preferred mass temperatures for the melt are 240 to 270°C and temperatures for the injection mold are 220 to 250°C.

Further, the present invention relates to a stabilization mixture comprising a beta-nucleating agent, an acid scavenger and a pigment. Further, the present invention relates to the use of said stabilization mixture comprising a beta-nucleating agent, an acid scavenger and a pigment for the production of polypropylene having a time before failure within an oven test at 130°C of at least 1000 hours after storage in chlorinated water with a chlorine content of 8 ppm and a temperature of 90 °C for 5 weeks.

A further object of the present invention is the use of a pipe comprising the inventive propylene homo- or copolymer for the transportation of chlorine-containing water. Such a pipe which is in permanent contact with chlorinated water has a remarkably improved behavior where long-term chlorine resistance is concerned.

**Measurement methods:**

**Melt flow rate**

Melt flow rate is measured according to ISO 1133, at 230°C and 2.16 kg load ($MFR_{2\cdot 16kg/230ºC}$) for polypropylene and is indicated in g/10 min. The MFR is an indication of the flowability, and hence the processability, of the polymer. The higher the melt flow rate, the lower the viscosity of the polymer.

**Comonomer content**

The comonomer content (weight percent) is determined in a known manner based on FTIR measurements, calibrated with $C_{13}$-NMR.

**Density**

The density is measured according to ISO 1183 on compression moulded specimens prepared in accordance with ISO 1873-2.

**Beta-crystallinity**

The presence of the beta-form is determined by Differential Scanning Calorimetry (DSC). DSC was run according to ISO 3146 / part 3 / method C2 with a scan rate of 10 °/min. The amount of beta-modification was calculated from the second heat by the following formula:

$$\text{beta-area} / (\text{alpha-area} + \text{beta-area})$$

"Second heat" means that the sample is heated according to ISO 3146 / part 3 / method C2 for a first time and then cooled to room temperature at a rate of 20 °C/min. The sample is then heated a second time, also according to ISO 3146 / part 3 / method C2. This second heat is relevant for measurement and calculation.

During the first heat all thermal history of the sample giving rise to different crystalline structure, which typically comes from different processing conditions and/or methods, is destroyed. Using the second heat for determination of beta-crystallinity, it is possible to compare samples regardless of the way the samples were originally manufactured.

**Refractive index**

The refractive index of pigments is measured according to ASTM D542 using an Abbé refractometer at 25°C.

**Lifetime properties**

The lifetime properties of the polypropylene compositions can be tested by two different lifetime measurements. Therefore, the polypropylene compositions were stored in chlorinated water wherein the average chlorine level was 8

ppm at an average temperature of 90°C for 5 weeks. Afterwards the time before failure / oxygen induction time of the compositions was measured according to:

**Determination of Thermal oxidative stability in Air -Oven Method** International Standard ISO 4577-1983 (E) being incorporated by reference herewith - Apparatus used: VTU 60/60 from Vötsch.

**Determination of the Oxidation Induction Time with Differential Scanning Calorimetry**

International Standard ISO 11357-6:2002(E) being incorporated by reference herewith

**Examples**

Base resin:

The base resin used is a propylene-ethylene random copolymer with an $MFR_{2\cdot 16kg/230°C}$ of 0.25 g/10 min, an ethene content of 3.5 wt% and a density of 0.905 g/cm$^3$ which is commercially available by Borealis Technology Oy.

Compositions:

For all examples the base resin was mixed with 0.07 wt% calcium stearate, 0.1 wt% Irgafos 168, 0.2 wt% Irganox 1010 and 0.5 wt% Irganox 1330.

Furthermore, the compounds shown in table 1 were also added and the resulting mixtures were pelletized in a conventional twin screw compounding line for preparation of comparative examples 1 to 3 (CE1-CE3) as well as for the preparation of inventive examples 1 and 2 (IE1 & IE2). The values are given in weight percent.

The comparative examples CE1 and CE2 all contain white pigments, either zinc sulfide or titanium dioxide but no beta-nucleating agent and no acid scavenger.

The comparative example CE3 contains the acid scavenger synthetic hydrotalcite and the beta-nucleating agent Cinquasia Gold provided in a masterbatch (MB) but no white pigment. The Cinquasia Gold masterbatch (CQ MB) consists of 0.25 wt% Cinquasia Gold (Quinachidrone - CAS-no. 1503-48-6), 70 wt% of commercial polypropylene resin from Borealis (HD120MO - CAS-no. 9003-07-0), and 29.75 wt% of a polyolefin wax CAS-no. 25085-53-4. Thus, the final concentration of the beta nucleating agent cinquasia gold in the composition is 50 ppm.

The inventive examples IE1 and IE2 contain the beta-nucleating agent Cinquasia Gold provided in the master batch (CQ MB) an acid scavenger and the white pigment zinc sulfide provided in a masterbatch (zinc sulfide MB). The zinc sulfide masterbatch consists of 75 wt% zinc sulfide - CAS-no. 1314-98-3 having a refractive index of 2.57, and 25 wt% polyethylene — CAS-no. 9002-88-4. Thus the final concentration of zinc sulfide in the inventive examples IE1 and IE2 as well as the comparative examples CE1- CE3 is 0.5 wt%. More particularly, the inventive composition of IE1 contains the acid scavenger synthetic hydrotalcite, the inventive composition of IE2 contains the acid scavenger magnesium oxide.

Irgafos 168 is Tris(2,4-di-t-butylphenyl)phosphite. (CAS-no. 31570-04-4)
Irganox 1010 is Pentaerythrityl-tetrakis(3-(3,5-di-tert. butyl-4-hydroxyphenyl)-propionate. (CAS-no. 6683-19-8)
Irganox 1330 is 1,3,5-Trimethyl-2,4,6-tris-(3,5-di-tert. butyl-4-hydroxyphenyl) benzene. (CAS-no. 1709-70-2)
Synthetic hydrotalcite is $Mg_{4,5}$ $Al_2$ $(OH)_{13}$ $(CO_3)$ 3,5$H_2O$ (synthetic magnesium-aluminum hydroxycarbonate). (CAS-no. 11097-59-9) Pigment Blue 15:3 (Copper Phthalocyanine Blue)- (CAS-no. 147-14-8)

Table 1:

| | | CE1 | CE2 | CE3 | IE1 | IE2 |
|---|---|---|---|---|---|---|
| Pigment | Zinc sulfide | 0.5 | | | | |
| | Zinc sulfide MB | | | | 0.7 | 0.7 |
| | Titanium-dioxide | | 0.5 | | | |
| Additional pigment | Pigment Blue 15:3 | 0.1 | 0.1 | | | |
| Acid scavenger | Synthetic hydrotalcite | | | 0.1 | 0.1 | |
| | Magnesium oxide | | | | | 0.1 |

(continued)

| | | CE1 | CE2 | CE3 | IE1 | IE2 |
|---|---|---|---|---|---|---|
| Beta nucleating agent | CQ MB* | | | 2 | 2 | 2 |
| *Cinquasia Gold Master Batch | | | | | | |

The times before failure of test specimens made from polypropylene compositions according to the examples after storage in chlorinated water as described above are shown in table 2.

Table 2:

| | CE1 | CE2 | CE3 | IE1 | IE2 |
|---|---|---|---|---|---|
| OIT [min] | 3 | 2 | 16 | 27 | 16 |
| % | 18.8% | 12.5% | 100% | 168.8 | 100% |
| Oventest [hrs] | 178 | 178 | 3408 | 4920 | 4440 |
| % | 5.2% | 5.2% | 100% | 144.4% | 130.3% |

The comparative examples 1 and 2 show the lifetime before failure of a polypropylene composition comprising a pigment.

The polypropylene compositions of examples 3 to 5 show an increased time before failure after storage in chlorinated water in both tests. More particularly, the composition of comparative example 3 comprising a beta-nucleating agent and an acid scavenger shows a prolonged time before failure in both tests compared to a polypropylene composition comprising a pigment.

Further a polypropylene composition according to inventive examples 4 and 5 comprising beta-nucleated polypropylene, an acid scavenger and a pigment shows an even more prolonged time before failure than the other two compositions.

That result shows that the combination of beta-nucleating agents, acid scavengers and white pigments in a propylene composition according to the present invention increases the lifetime of propylene polymers. Thus, the stabilizing mixture comprising a beta-nucleating agent, an acid scavenger and a pigment shows a synergistic effect on the lifetime of a polypropylene composition.

## Claims

1. A polypropylene composition comprising

   i. a base resin, consisting of at least one propylene homo- or copolymer;
   ii. an acid scavenger; and
   iii. a pigment.

2. Polypropylene composition according to claim 1, wherein the base resin has an amount of beta-crystallinity determined by Differential Scanning Calorimetry of at least 80 %.

3. Polypropylene composition according to claim 2, wherein beta-crystallinity is induced by a beta-nucleating agent according to at least one quinacridone compound of formulas I to III

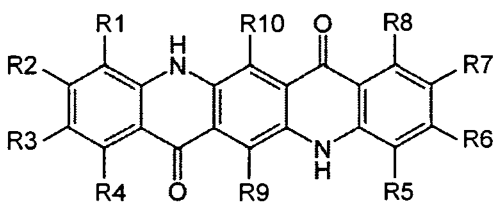

I

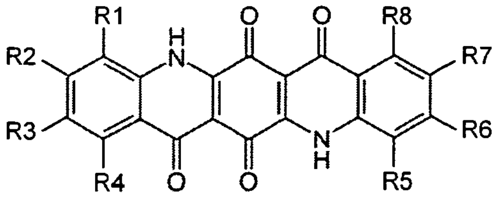

II

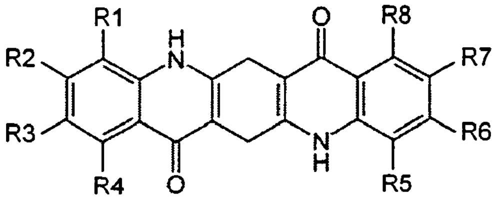

III

wherein R1, R2, R3, R4, R5, R6, R7, R8, R9 and R10 independently are H, alky, halogen, alkoxy or aryl; or at least one dicarboxylic acid salt of at least one earth alkali metal or a mixture thereof.

**4.** Polypropylene composition according to any one of the preceding claims, wherein the acid scavenger is a metal oxide or a metal hydroxy carbonate or mixtures thereof.

**5.** Polypropylene composition according to any one of the preceding claims, wherein the acid scavenger is present in an amount of 0.01 to 1.0 wt% with respect to the propylene composition

**6.** Polypropylene composition according to any one of the preceding claims, wherein the pigment is a white pigment.

**7.** Polypropylene composition according to any one of the preceding claims, wherein the pigment is present in an amount of 0.1 wt% to 3 wt% with respect to the propylene composition.

**8.** Polypropylene composition according to any one of the preceding claims, wherein the polypropylene composition has an $MFR_{2\cdot 16kg/230°C}$ of 0.05 to 40 g/10min.

**9.** Polypropylene composition according to any one of the preceding claims, wherein the base resin is a propylene copolymer, whereby the comonomer of the propylene copolymer forming the base resin is at least one alpha-olefin selected from $C_2$, and $C_4$-$C_{18}$ alpha-olefins.

**10.** Polypropylene composition according to claim 9, wherein the base resin comprises 0.1 to 10 wt% of comonomer.

**11.** Polypropylene composition according to any one of the preceding claims, wherein the base resin is a propylene random copolymer.

**12.** Polypropylene composition according to any one of the preceding claims, wherein the polymer composition consists of

i. a base resin, consisting of at least one propylene homo- or copolymer;
ii. an acid scavenger;
iii. a pigment; and
iv. additives in an amount of up to 20 wt% with respect to the total composition.

**13.** Polypropylene composition according to any one of the preceding claims, wherein the composition has an oxidation induction time, determined according to ISO 11357-6:2002(E), at 210 °C of at least 5 minutes after storage in

chlorinated water with a chlorine content of 8 ppm and a temperature of 90°C for 5 weeks when being determined on a compression molded test specimen.

**14.** Polypropylene composition according to any one of the preceding claims, wherein the composition has a time to failure, determined according to ISO 4577-1983:E-8-2, within an oven test at 130°C of at least 1000 hours after storage in chlorinated water with a chlorine content of 8 ppm and a temperature of 90 °C for 5 weeks when being determined on a compression molded test specimen.

**15.** A process for producing the polypropylene composition according to any one of the claims 1 to 14, wherein the composition is prepared by melt mixing the base resin with components comprising beta-nucleating agents, an acid scavenger and a pigment at temperatures from 175 °C to 250 °C.

**16.** An article made of the polypropylene composition according to any one of claims 1 to 14.

**17.** A stabilization mixture comprising a beta-nucleating agent, an acid scavenger and a pigment.

**18.** Use of a stabilization mixture comprising a beta-nucleating agent, an acid scavenger and a pigment for the production of polypropylene having a time before failure within an oven test at 130°C of at least 1000 hours after storage in chlorinated water with a chlorine content of 8 ppm and a temperature of 90 °C for 5 weeks.

**19.** Use of a pipe comprising the propylene homo- or copolymer according to claims 1 to 14 for the transportation of chlorine containing water.

Europäisches Patentamt
European Patent Office
Office européen des brevets

# EUROPEAN SEARCH REPORT

Application Number
EP 10 00 1679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 083 042 A1 (BOREALIS TECH OY [FI]) 29 July 2009 (2009-07-29) | 1-5, 7-14, 16-19 | INV. C08L23/12 C08L23/10 C08K5/00 C08K5/3437 C08K5/098 C08K3/22 C08K3/26 C08K3/30 C08K3/00 |
| Y | * paragraphs [0001], [0009], [0026], [0044], [0049], [0054], [0069], [0067] * | 6,15 | |
| X | EP 2 067 798 A1 (BOREALIS TECH OY [FI]) 10 June 2009 (2009-06-10) | 1-5, 7-14,16, 17,19 | |
| Y | * paragraphs [0001], [0007], [0008], [0019] - [0021], [0032] - [0035], [0043], [0046], [0047], [0049], [0052], [0062] * | 6,15 | |
| Y | EP 1 312 623 A1 (BOREALIS TECH OY [FI]) 21 May 2003 (2003-05-21) * paragraph [0074] * | 6 | |
| Y | US 2006/167141 A1 (DOLLE VOLKER [DE] ET AL DOLLE VOLKER [DE] ET AL) 27 July 2006 (2006-07-27) * paragraph [0015] * | 15 | TECHNICAL FIELDS SEARCHED (IPC) C08F C08L C08K |

The present search report has been drawn up for all claims

| Place of search | Date of completion of the search | Examiner |
|---|---|---|
| The Hague | 18 May 2010 | Queste, Sébastien |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 10 00 1679

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2010

| Patent document cited in search report | Publication date | Patent family member(s) | Publication date |
|---|---|---|---|
| EP 2083042 A1 | 29-07-2009 | WO 2009092700 A1 | 30-07-2009 |
| EP 2067798 A1 | 10-06-2009 | WO 2009071471 A1 | 11-06-2009 |
| EP 1312623 A1 | 21-05-2003 | AT 315592 T | 15-02-2006 |
| | | CN 1604922 A | 06-04-2005 |
| | | DE 60208712 T2 | 02-11-2006 |
| | | WO 03042260 A1 | 22-05-2003 |
| | | ES 2258163 T3 | 16-08-2006 |
| | | HU 0402369 A2 | 28-02-2005 |
| | | JP 4208718 B2 | 14-01-2009 |
| | | JP 2005509121 T | 07-04-2005 |
| | | PT 1448631 E | 31-05-2006 |
| | | RU 2310789 C2 | 20-11-2007 |
| | | US 2005053741 A1 | 10-03-2005 |
| US 2006167141 A1 | 27-07-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5170932 A
- WO 03064511 A
- EP 0177961 B
- EP 1887934 A